Europäisches Patentamt

European Patent Office

Office européen des brevets

(19)

(11) Veröffentlichungsnummer: **0 052 721**

**A1**

(12) **EUROPÄISCHE PATENTANMELDUNG**

(21) Anmeldenummer: 81107836.9

(22) Anmeldetag: 02.10.81

(51) Int. Cl.³: **F 16 D 27/10**

(30) Priorität: 21.11.80 DE 3043844

(43) Veröffentlichungstag der Anmeldung:
02.06.82 Patentblatt 82/22

(84) Benannte Vertragsstaaten:
CH FR GB IT LI NL

(71) Anmelder: Maschinenfabrik Hans Lenze KG

D-4823 Extertal(DE)

(72) Erfinder: Pape, Karl-Heinz

D-4952 Porta Westfalica(DE)

(74) Vertreter: Elbertzhagen, Otto, Dipl.-Ing.
Patentanwälte Thielking, Bodo Dipl.-Ing. Elbertzhagen,
Otto Dipl.-Ing. Gadderbaumer Strasse 20
D-4800 Bielefeld 1(DE)

(54) **Schlingfeder-Kupplung.**

(57) Eine solche Schlingfeder-Kupplung besitzt zwei axial fluchtende Kupplungsnaben (1,2), über denen sich eine mit ihrem einen Ende (4) und der einen Nabe (1) drehfest verbundene Schlingfeder (3) erstreckt. Mit ihrem anderen Ende (6) ist die Schlingfeder (3) mit einem koaxial zu den Naben (1,2) verschieblichen Kupplungsanker (9) drehfest verbunden. Der Kupplungsanker (9) ist Teil des magnetischen Kreises eines Elektromagneten (11) und wird bei dessen Erregung reibschlüssig mit einem ebenfalls magnetisch aktiven Radialflansch (12) der zweiten Nabe (2) gekuppelt.

Um eine zwangsweise Öffnung des Magnetsystems und dadurch ein exaktes Löschen des Magnetfeldes vorzusehen, damit über die gesamte Lebensdauer der Schlingfeder-Kupplung exakt gleichbleibende Öffnungs- und Schließzeiten erzielt werden, ist am Kupplungsanker (9) eine andererseits am Radialflansch (12) der zweiten Nabe (2) angreifende, dem Kraftschluß zwischen dem Kupplungsanker (9) und dem Radialflansch (12) der zweiten Nabe (2) entgegenwirkende Feder (14) angeordnet.

FIG.1

EP 0 052 721 A1

- 1 -

Schlingfeder-Kupplung

Die Erfindung bezieht sich auf eine Schlingfeder-Kupplung mit zwei axial fluchtenden Kupplungsnaben, über denen sich eine mit ihrem einen Ende mit der anderen Nabe drehfest verbundene Schlingfeder erstreckt, die mit ihrem anderen Ende mit einem koaxial zu den Naben verschieblichen Kupplungsanker drehfest verbunden ist, wobei der Kupplungsanker Teil des magnetischen Kreises eines Elektromagneten ist und bei dessen Erregung reibschlüssig mit einem ebenfalls magnetisch aktiven Radialflansch der zweiten Nabe gekuppelt ist.

Solche Schlingfeder-Kupplungen werden vornehmlich beim gesteuerten, intermittierenden Betrieb verschiedener mechanischer Vorrichtungen eingesetzt, insbesondere finden sie in Büromaschinen, vor allem bei Druck- oder Kopiereinrichtungen, Papierzuführvorrichtungen oder dergleichen Verwendung.

Es ist eine Schlingfeder-Kupplung gemäß dem Oberbegriff des Patentanspruchs 1 bekannt (deutsche Offenlegungsschrift 23 12 486), bei der bei nicht erregtem Elektromagneten die beiden Kupplungsnaben so voneinander getrennt sind, daß die eine Nabe gegenüber der anderen frei laufen kann. Mit der Erregung des Elektromagneten erzeugt der Reibschluß zwischen dem axial verschieblichen Kupplungsanker und dem Radialflansch der zweiten Nabe ein auf die Schlingfeder wirkendes Reaktionsmoment, durch das die wendelförmige Schlingfeder gegen die Außenflächen der beiden Naben gepresst wird, wonach die beiden Naben zur Übertragung von Drehmomenten zumindest in einer Drehrichtung miteinander gekuppelt sind. Es sind auch Bauformen mit beispielsweise zwei gegenläufig gewendelten Schwingfedern möglich, um in beiden Drehrichtungen zwischen den Kupplungsnaben Drehmomente übertragen zu können.

Mit zunehmender Automatisierung und Perfektionierung der vorerwähnten Maschinen werden kurze, insbesondere gleichbleibende Takt- bzw. Zykluszeiten für die intermittierend betriebenen mechanischen Vorrichtungen gefordert, was an die Öffnungs- und Schließzeiten der dafür verwendeten Schlingfeder-Kupplungen hohe Anforderungen stellt. Hier zeigen die bekannten Kupplungen noch Nachteile.

Um Energieverluste möglichst zu vermeiden, die auch zu einer unnötigen Bauteileerwärmung führen, strebt man bei Schwingfeder-Kupplungen der in Rede stehenden Art an, die Systemluftspalte so klein wie möglich zu halten. Bei den nahezu luftspaltlosen, also im magnetischen Kurzschlußbereich arbeitenden Elektromagneten der Schlingfeder-Kupplungen verhindert die

- 3 -

Remanenz der ferromagnetischen Werkstoffe zumindest einen schnellen Abbau
des magnetischen Feldes, wodurch sich
die unter Relativbewegungen stehenden
Bauteile der Schlingfeder-Kupplungen
beim Abschalten der Erregerspule nicht
vollkommen trennen und unter Einwirkung
der verbleibenden Kraftwirkung der
Magnetstoffremanenz verschleißen. Ein
solcher Verschleiß führt zu einer vorzeitigen Verschmutzung der jeweiligen
Kupplung, damit sind zugleich stärker
streuende Reaktionszeiten des gesamten
Kupplungssystems verbunden.

Hier will die Erfindung Abhilfe schaffen.
Die Erfindung, wie sie in den Ansprüchen
gekennzeichnet ist, löst die Aufgabe,
bei einer Schlingfeder-Kupplung der
gattungsgemäßen Art eine zwangsweise
Öffnung des Magnetsystems und dadurch
ein exaktes Löschen des Magnetfeldes
vorzusehen, damit über die gesamte Lebensdauer der Schlingfeder-Kupplung exakt
gleichbleibende Öffnungs- und Schließzeiten
erzielt werden.

Die durch die Erfindung erreichten Vorteile
sind im wesentlichen darin zu sehen, daß
ein Kleben des Kupplungsankers an dem
Radialflansch der zweiten Nabe nach Entregen der Magnetspule vermieden ist und
in Abhängigkeit der systembedingten
Kräfte die Federkraft und die Federkennlinie zur Erzielung vorbestimmter,
jedoch stets gleichbleibender Öffnungs-

- 4 -

und Schließzeiten der Schlingfeder-
Kupplung vorgegeben werden können. Vor
allem wird auch ein Verschleiß durch
Reibung zwischen dem axial verschieblichen
Kupplungsanker und dem Radialflansch der
zweiten Kupplungsnabe abgebaut, wodurch
ferner die Lebensdauer der Kupplung erhöht
wird.

Im folgenden wird die Erfindung anhand
einer lediglich einen Ausführungsweg
darstellenden Zeichnung näher erläutert.
Es zeigt

Figur 1 einen halbseitigen Längsschnitt
durch eine Schlingfeder-Kupplung nach
der Erfindung in entkuppeltem Zustand
und

Figur 2 einen Teillängsschnitt der
Schlingfeder-Kupplung gemäß Figur 1
in gekuppeltem Zustand.

Die in den Figuren dargestellte Schlingfeder-Kupplung besitzt eine erste Kupplungsnabe 1, die drehbar auf einer zweiten
Kupplungsnabe 2 gelagert ist. Die
Kupplungsnaben 1 und 2 besitzen zylindrische
Außenflächen, die zueinander koaxial
fluchtend angeordnet sind. Im Bereich
dieser zylindrischen Außenflächen erstreckt
sich über beide Kupplungsnaben 1 und 2
hinweg eine Schlingfeder 3, die beim
Ausführungsbeispiel aus einem gewendelten
Federband mit quadratischem Querschnitt

- 5 -

besteht. Mit ihrem in der Zeichnung rechten Ende 4, das zu den Kupplungsnaben 1 und 2 achsparallel ausgerichtet ist, greift die Schlingfeder 3 formschlüssig in eine Ausnehmung 5 der ersten Kupplungsnabe 1 ein, mit der also die Schlingfeder 3 drehfest verbunden ist. Mit ihrem anderen, linken Ende 6, das ebenfalls vorzugsweise achsparallel zu den Naben 1 und 2 abgewinkelt ist, greift die Schlingfeder 3 in eine Aussparung 7 eines Gleitkörpers 8 ein, der über ein radiales Mitnehmerelement 10: mit einem radial nach außen anschließenden Kupplungsanker 9 drehfest verbunden ist.

In entspanntem Zustand der Schlingfeder 3 können sich die beiden Kupplungsnaben 1 und 2 zueinander frei drehen. Die gleiche Dreh-Bewegungsfreiheit gegenüber der zweiten Nabe 2 besteht auch für die Schlingfeder 3, den Gleitkörper 8 und den Kupplungsanker 9. Ist beispielsweise die Kupplungsnabe 2 mit einem Antrieb verbunden und stellt entsprechend die Nabe 1 das abtriebsseitige Kupplungsteil dar, kann sich die Kupplungsnabe 2 bei entspannter Schlingfeder 3 frei gegenüber der Nabe 1, dem Gleitstück 8, dem Kupplungsanker 9 und selbstverständlich auch gegenüber der Schlingfeder 3 drehen.

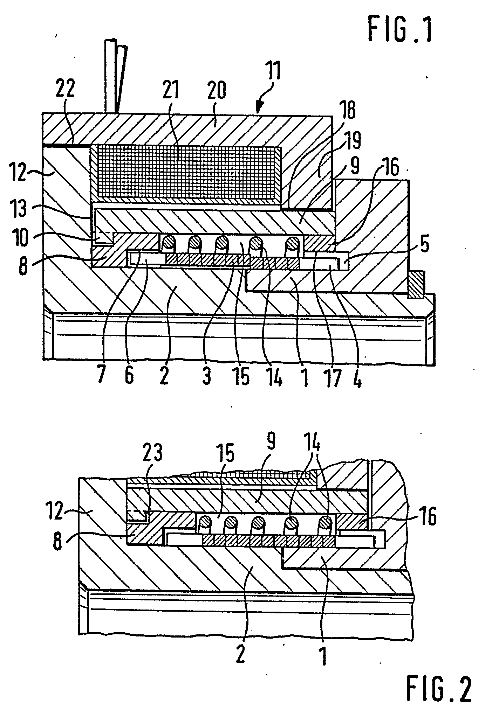

Der gekuppelte Zustand wird durch eine axiale Verschiebung des Kupplungsankers 9 aus der in Figur 1 gezeigten Lage nach

- 6 -

links erzielt. Dazu ist der Kupplungsanker 9, der koaxial zu den Kupplungsnaben 1 und 2 angeordnet ist, nicht nur dagegen axial verschiebbar, sondern auch gegenüber dem Gleitkörper 8, weswegen das Mitnehmerelement 10 des Kupplungsankers 9 in einen achsparallelen Längsschlitz des Gleitkörpers 8 eingreift.

An der Kupplungsnabe 2 ist endseitig zweckmässig einstückig ein radialer Flansch 12 angeformt, der in radialer Richtung den Kupplungsanker 9 stirnseitig übergreift. In entkuppeltem Zustand, in dem entsprechend den Dar- stellungen der Zeichnungen der Kupp- lungsanker 9 nach rechts verschoben ist, besteht zwischen der linken Stirnseite des Kupplungsankers 9 und der inneren, rechten Stirnseite des Radialflansches 12 der Nabe 2 ein Luftspalt 13. Zum Einkuppeln und in eingekuppeltem Zustand der Kupplung ist dieser Luftspalt 13 geschlossen, wie Figur 2 veranschaulicht.

Die Steuerung des Kupplungsankers 9 erfolgt elektromagnetisch. Deshalb ist der Kupplungsanker 9 Teil des magnetischen Kreises eines Elektromagneten 11. Das gleiche trifft für den Radialflansch 12 der zweiten Nabe 2 zu. Wird der Elektromagnet 11 erregt, schließt sich dessen Magnetfluß über den Kupplungsanker 9 und den Radialflansch 12 der zweiten Nabe 2, dadurch

- 7 -

wird infolge der Magnetkräfte der
Kupplungsanker 9 reibschlüssig gegen
den erwähnten Radialflansch 12 gedrückt,
infolge dieses Reibschlusses tritt ein
Reaktionsmoment zwischen dem Kupplungsanker 9 und der ersten Nabe 1 auf.
Über den als Mitnehmer für die Schlingfeder 3 wirkenden Gleitkörper 8 wird
das linke Ende 6 der Schlingfeder 3
relativ zur ersten Nabe 1 mitgenommen,
wodurch sich die Schlingfeder 3 verengt
und außenseitig gegen die zweite Nabe 2
preßt. Es kann dann in der entsprechenden
Drehrichtung ein Drehmoment zwischen den
beiden Kupplungsnaben 1 und 2 übertragen
werden.

Zum Lösen der Schlingfeder 3 gegenüber
der zweiten Kupplungsnabe 2 muß der
Elektromagnet 11 wieder entregt werden.
Damit zugleich eine sofortige mechanische
Trennung zwischen dem Kupplungsanker 13
und dem Radialflansch 12 der zweiten
Nabe 2 erfolgt, ist zwischen diesen
beiden Elementen der Kupplung eine
Feder 14 wirksam, die beim Ausführungsbeispiel als Druckfeder ausgebildet ist.
Die Kraft dieser Feder 14 muß selbstverständlich auch beim Einschaltvorgang
überwunden werden, die hier zusätzlich
erforderliche magnetische Energie ist
jedoch nicht nachteilig, da andererseits
der wesentlichere Vorteil einer vorbestimmbaren und stets gleichbleibenden
Öffnungs- und Schließzeit der Kupplung
erreicht wird.

Im einzelnen ist der Kupplungsanker 9 als längliche zylindrische Hülse ausgebildet. Im Bereich seines einen Endes ist der hülsenartige Kupplungsanker 9 über den Gleitkörper 8 auf der Kupplungsnabe 2 gelagert. An seinem anderen Ende besitzt der hülsenartige Kupplungsanker 9 in Gestalt eines radial nach innen vorstehenden Kragens einen Lagerring 16 mit dem er auf einer radial vorstehenden Schulter 17 der ersten Nabe 1 gelagert ist. Der hülsenförmige Kupplungsanker 9 übergreift also nach beiden Seiten hin die beiden Kupplungsnaben 1 und 2. Er hat von den beiden Außenflächen dieser Kupplungsnaben 1 und 2 einen derart großen Abstand, daß noch zwischen der Außenseite der Schlinfeder 3 und der Innenseite des hülsenförmigen Kupplungsankers 9 ein Ringraum 15 gebildet ist, in dem die Druckfeder 14 Platz hat. Auch bei dieser Feder 14 handelt es sich zweckmässig um eine gewendelte Feder. Mit ihrem einen Ende stützt sich die Druckfeder 14 auf der Innenseite des fest in den Kupplungsanker 9 eingesetzten Lagerringes 16 ab. Auf der dem Lagerring 16 abgewandten Seite liegt die Druckfeder 14 an der inneren Stirnseite des Gleitkörpers 8 an. Der Gleitkörper 8 übernimmt somit eine Doppelfunktion, denn über ihn stützt sich die Druckfeder 14 in axialer Richtung an der inneren Stirnseite des Radialflansches 12 der zweiten Nabe 2 ab. Sofern der Kupplungsanker 9 erregt ist und zugleich ist - wie schon erwähnt - über den Gleitkörper 8 der Kupplungsanker 9 auf der Nabe 2
drehbar gelagert.

Grundsätzlich könnten der radiale,
kragenförmige Lagerring 16 und/oder
der Gleitkörper 8 einstückig an den
hülsenförmigen Kupplungsanker 9 angeformt
sein. Sowohl im Hinblick auf die Lagerreibung als auch wegen Vermeidung von
magnetischen Streuflüssen ist dies unzweckmässig, deshalb bestehen sowohl
der Gleitkörper 8 als auch der Lagerring 16
vorteilhaft aus einem antimagnetischen,
gleitfreundlichen Werkstoff. Dies ist
auch für die axiale Verschieblichkeit
des hülsenförmigen Kupplungsankers 9
gegenüber dem Gleitkörper 8 von Wichtigkeit.

Wie Figur 1 weiter zeigt, bietet die
hülsenförmige Ausbildung des Kupplungsankers 9 für den magnetischen Kreis des
Elektromagneten 11 noch weitere Vorteile.
Der Elektromagnet 11 kann nämlich vorteilhaft mit einer feststehenden Ringspule 21
und einem feststehenden, ringförmigen
Joch 20 ausgebildet werden, wobei das
Joch 20 koaxial zum hülsenförmigen
Kupplungsanker 9 angeordnet ist und
an der einen Seite des Joches 20 der
magnetische Kreis zum Kupplungsanker 9
hin durch ein radial nach innen gerichtetes
Polstück 19 geschlossen ist. Zwischen
diesem feststehenden Polstück 19 und dem
Kupplungsanker 9 besteht ein radialer
Luftspalt 18', damit sich der Kupplungsanker 9 gegenüber dem Polstück 19 nicht nur
drehen, sondern auch in axialer Richtung verschieben kann. Auf der anderen Seite des Joches 20 schließt sich der magnetische Kreis über einen weiteren radialen Luftspalt 22 zur Umfangsseite des Radialflansches 12 der zweiten Nabe hin. Auch dieser zweite radiale Luftspalt 22 kann sehr klein gehalten werden, damit nahezu ein magnetischer Kurzschluß bei erregter Spule 21 über das Joch 20, das Polstück 19, den Kupplungsanker 9 und den Radialflansch 12 der Nabe 2 erzielt wird. Die kurzen ferromagnetischen Wege und die weit auseinander liegenden Luftspalte des magnetischen Kreises verhindern weitestgehend Streuflüsse, die nicht nur eine zusätzliche magnetische Energie bedingten, sondern auch die Öffnungs- und Schließzeiten des Kupplungsankers 9 und damit der gesamten Kupplung beeinträchtigten. Insbesondere schließt sich der magnetische Kreis nicht über die Druckfeder 14 und die Schlingfeder 3, was die Exaktheit der Öffnungs- und Schließzeiten der Kupplung erhöht. Auch der Gleitkörper 8 als Lagerelement des Kupplungsankers 9, als Widerlager für die Druckfeder 14 und als Mitnehmer für die Schlingfeder 3, gehört nicht zu den magnetisch aktiven Teilen der Vorrichtung, er kann deshalb seinen mechanischen Aufgaben entsprechend optimal ausgeführt werden.

Figur 2 entnimmt man noch, daß der achsparallele Längsschlitz 23 des Gleitkörpers 8 in Verschiebungsrichtung des Kupplungsankers 9 etwas länger als dessen Mitnehmerelement 10 ist. Dadurch ist die axiale Relativverschieblichkeit des Kupplungsankers 9 gegenüber dem Gleitkörper 8 auf die axiale Längendifferenz des Längsschlitzes 23 und des Mitnehmerelementes 10 begrenzt. In der Endlage des entregten Zustandes stützt sich der Kupplungsanker 9 über die zur Feder 14 hin liegende Stirnseite seines Mitnehmerelementes 10 an der gegenüberliegenden Stirnseite des Längsschlitzes 23 des Gleitkörpers 8 ab, diese Lage ist in Figur 1 wiedergegeben. Dadurch wird unmittelbar über den Kupplungsanker 9 die Kraft der Feder 14 in entregtem Zustand kompensiert, weitere Teile der Kupplung werden von der Feder 14 nicht kräftemässig beaufschlagt. Es gibt daher weder in erregtem noch unerregtem Zustand der Magnetkupplung Axialkräfte, die zwischen den zwei zu kuppelnden Naben 1 und 2 wirksam wären.

- 12 -

Patentansprüche:

1. Schlingfeder-Kupplung mit zwei aixial fluchtenden Kupplungsnaben, über denen sich eine mit ihrem einen Ende mit der einen Nabe drehfest verbundene Schlingfeder erstreckt, die mit ihrem anderen Ende mit einem koaxial zu den Naben verschieblichen Kupplungsanker drehfest verbunden ist, wobei der Kupplungsanker Teil des magnetischen Kreises eines Elektromagneten ist und bei dessen Erregung reibschlüssig mit einem ebenfalls magnetisch aktiven Radialflansch der zweiten Nabe gekuppelt ist, dadurch gekennzeichnet, daß am Kupplungsanker (9) eine andererseits am Radialflansch (12) der zweiten Nabe (2) angreifende, dem Kraftschluß zwischen dem Kupplungsanker (9) und dem Radialflansch (12) der zweiten Nabe (2) entgegenwirkende Feder (14) angeordnet ist.

2. Schlingfeder-Kupplung nach Anspruch 1, dadurch gekennzeichnet, daß der Kupplungsanker (9) als längliche Hülse ausgebildet ist und die Schlingfeder (3) in Abstand übergreift, wobei in einem dadurch gebildeten Ringraum (15) innerhalb des Kupplungsankers (9) die Feder (14) angeordnet ist.

3. Schlingfeder-Kupplung nach Anspruch 2, dadurch gekennzeichnet, daß die Feder (14) als Druckfeder ausgebildet und zwischen einem radial nach innen vorstehenden Kragen (16) am Kupplungsanker (9) und einem sich axial am Radialflansch (12) der zweiten Nabe (2) abstützenden Gleitkörper (8) angeordnet ist.

4. Schlingfeder-Kupplung nach Anspruch 1, dadurch gekennzeichnet, daß der Kupplungsanker (9) über den Gleitkörper (8) auf der zweiten Nabe (2) gelagert ist.

5. Schlingfeder-Kupplung nach Anspruch 3 oder 4, dadurch gekennzeichnet, daß der Kragen (16) als fest eingesetzter Lagerring an dem Radialflansch (12) abgewandten Ende des Kupplungsankers (9) angeordnet ist und darüber der Kupplungsanker (9) auf der ersten Nabe (1) gelagert ist.

6. Schlingfeder-Kupplung nach Anspruch 4 oder 5, dadurch gekennzeichnet, daß der Gleitkörper (8) und/oder der Lagerring (16) aus einem antimagnetischen Werkstoff bestehen.

7. Schlingfeder-Kupplung nach einem der Ansprüche 4 bis 6, dadurch gekennzeichnet, daß der Gleitkörper (8) mit dem dagegen axial verschieblichen Kupplungsanker (9) drehfest verbunden und als Mitnehmer für die Schlingfeder (3) ausgebildet ist.

8. Schlingfeder-Kupplung nach einem der Ansprüche 2 bis 7, dadurch gekennzeichnet, daß die den Kupplungsanker (9) bildende Hülse im wesentlichen hohlzylindrisch ist und mit ihrem dem Radialflansch (12) abgewandten Ende über einen radialen Luftspalt (18) an ein feststehendes Polstück (19) der Elektromagneten (11) nach außen hin anschließt.

9. Schlingfeder-Kupplung nach Anspruch 8, dadurch gekennzeichnet, daß das Polstück (19) Teil eines feststehenden Joches (20) des Elektromagneten (11) ist, an das der Radialflansch (12) der zweiten Nabe (2) über einen weiteren radialen Luftspalt (22) anschließt.

FIG.1

FIG.2

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 4 194 607 (YAMAGUCHI) | 1,3,8, |
| Y | * insgesamt * <br> --- | 2,4-7 |
| Y | DE - A - 2 133 874 (WARNER ELECTRIC) <br> * insgesamt * <br> --- | 2,5 |
| Y | DE - A - 2 919 992 (WARNER ELECTRIC) <br> * insgesamt * <br> --- | 4,6,7 |
| A | DE - A - 2 527 155 (MARQUETTE METAL) <br> * insgesamt * <br> --- | 1,9 |
| A | US - A - 3 104 745 (WIPKE) <br> * insgesamt * <br> --- | 2 |
| A | GB - A - 938 574 (WARNER ELECTRIC) | |
| A | DE - B - 1 292 453 (WARNER ELECTRIC) | |

------------

**KLASSIFIKATION DER ANMELDUNG (Int. Cl.3)**

F 16 D 27/10

**RECHERCHIERTE SACHGEBIETE (Int. Cl.3)**

F 16 D 27/00
F 16 D 13/00

**KATEGORIE DER GENANNTEN DOKUMENTE**

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort <br> Den Haag | Abschlußdatum der Recherche <br> 15.02.1982 | Prüfer <br> BALDWIN |
|---|---|---|

EPA form 1503.1  06.78